# EUROPEAN PATENT APPLICATION

(11) **EP 1 406 064 A1**
(43) Date of publication of application: **07.04.2004**
(21) Application number: 03020858.1
(22) Date of filing: 15.09.2003
(51) Int. Cl.: G01C 21/34, G08G 1/0969

(54) **Map display system**

(30) Priority: 27.09.2002 JP 2002283328
(71) Applicant: Denso Corporation, Kariya-city, Aichi-pref., 448-8661 (JP)
(72) Inventor: Taniguchi, Hisamori c/o DENSO CORPORATION, Kariya-city Aichi-pref. 448-8661 (JP)
(74) Representative: Winter, Brandl, Fürniss, Hübner, Röss, Kaiser, Polte Partnerschaft

(57) **Abstract**

Map data has node information regarding nodes and link information regarding links. When data indicating a first road and a second road is inputted through an inputting means (5, 6, 10), a controlling means (2) retrieves first nodes and second nodes. The first nodes and the second nodes are connected with first links and second links, both of which constitute the first road and the second road, respectively. A given node of the first nodes and a certain node of the second nodes are connected through a link that has a roundabout attribute or through one or more nodes and links having roundabout attributes. Under the preceding conditions, the control circuit recognizes that the given and certain nodes are nodes of a roundabout and displays a map including the roundabout having the given and certain nodes.

## Description

The present invention relates to a map display system for a vehicle, the system which has a function of retrieving a roundabout.

For instance, a map display system for a vehicle detects a present position using GPS or the like and displays on a display unit the present position and a map surrounding the present position for a user to smoothly reach a desired point. Furthermore, once a destination is designated, the map display system for a vehicle computes a guide route from the present position to the destination and displays the guide route on the map on the display unit with using a color different from a color for usual roads. The map display system furthermore instructs by voice a vehicle's traveling direction according to the guide route to assist traveling to the destination.

In a map display system for a vehicle, a destination is designated through a telephone number, an address, a name, or the like. On the other hand, reaching a certain roundabout (or traffic circle) sometimes makes it easier to finally find the subsequent route to a destination. For instance, it is assumed that a user who would like to go to Restaurant A asks by phone where Restaurant A is and receives the reply of "Restaurant A is on the north of Roundabout B." In this case, the user must head for Roundabout B at first.

However, a present map display system for a vehicle has no function of retrieving a roundabout, so that the aimed roundabout must be searched by opening a road map, which is really bothersome. This invention is made under the above circumstances. An object of the invention is to provide a map display system having a function of retrieving a roundabout.

To achieve the above object, a map display system of the present invention is characterized by comprising the following. Map data storing means stores map data. Displaying means displays the map data stored by the map data storing means. Inputting means inputs data for retrieving a desired point. Controlling means retrieves, based on the map data stored by the map data storing means and the data inputted by the inputting means, the desired point to display a map including the retrieved desired point. Here, the controlling means is constructed as retrieving a roundabout based on the map data stored by the map data storing means and the data inputted by the inputting means when the data inputted by the inputting means is for retrieving a roundabout.

According to the above means, when retrieving data regarding a roundabout is inputted, the roundabout is retrieved based on the retrieving data and displayed on the display means. Bothersome work of searching for the roundabout using a road map can be dispensable.

In another aspect of the invention, two roads that join a roundabout can be designated as data for retrieving the roundabout. Namely, the map data includes node information regarding nodes and link information regarding links. When data indicating a first road and a second road is inputted by the inputting means, the controlling means retrieves first nodes and second nodes. Here, the first nodes and the second nodes are connected with first links constituting the first road and second links constituting the second road, respectively. When a given node of the first nodes and a certain node of the second nodes are connected with each other through a link that has a roundabout attribute or through one or more nodes and links having roundabout attributes, the control circuit recognizes that the given and certain nodes are nodes of a roundabout and displays, on the displaying means, a map including the roundabout having the given and certain nodes.

According to the above means, when; two roads are designated, a roundabout that the two roads join can be retrieved. The roundabout can be thereby retrieved without knowing a name of the roundabout.

In another aspect of the invention, a name of a roundabout that is desired to be retrieved can be data for retrieving the roundabout. Namely, the map data includes data where names of roundabouts are correlated with map positions of the roundabouts. When a name of a roundabout is inputted by the inputting means, the controlling means displays, on the displaying means, a map including the roundabout inputted by the inputting means based on the inputted name of the roundabout and the map data.

According to the above means, when a name of a roundabout is known, data input for retrieving the roundabout becomes easy.

Furthermore, in another aspect of the invention, when a genre and an area of a destination are known, listing up of corresponding roundabouts using the genre and area to select a desired name of the roundabout leads to saving trouble of inputting a name of the roundabout. Namely, the map data includes data where names of points are correlated with map positions of the points and data where the points are classified by genres and areas. When a genre of the desired point is selected and an area where the desired point is located is selected, the controlling means retrieves names of roundabouts included in the selected area based on the map data and displays, on the displaying means, the names of roundabouts included in the selected area. When a given name is selected from the displayed names of roundabouts by the inputting means, the controlling means displays, on the displaying means, the selected given name and a map including the corresponding roundabout based on the inputted given name of roundabout and the map data.

The above and other objects, features, and advantages of the present invention will become more apparent from the following detailed description made with reference to the accompanying drawings. In the drawings:
FIG. 1 is a schematic block diagram of a map display system for a vehicle according to an embodiment of the present invention;
FIG. 2 is a diagram showing an instance of map data constituted by nodes and links;
FIG. 3 is a diagram showing an intersection;
FIG. 4 is a diagram showing a roundabout;
FIG. 5 is views showing operation of name retrieving according to the embodiment;
FIG. 6 is views showing operation of genre retrieving according to the embodiment;
FIG. 7 is views showing operation of intersection retrieving according to the embodiment; and
FIG. 8 is a flowchart diagram explaining operation of a control circuit in intersection retrieving according to the embodiment.

### (Embodiment of the present invention)

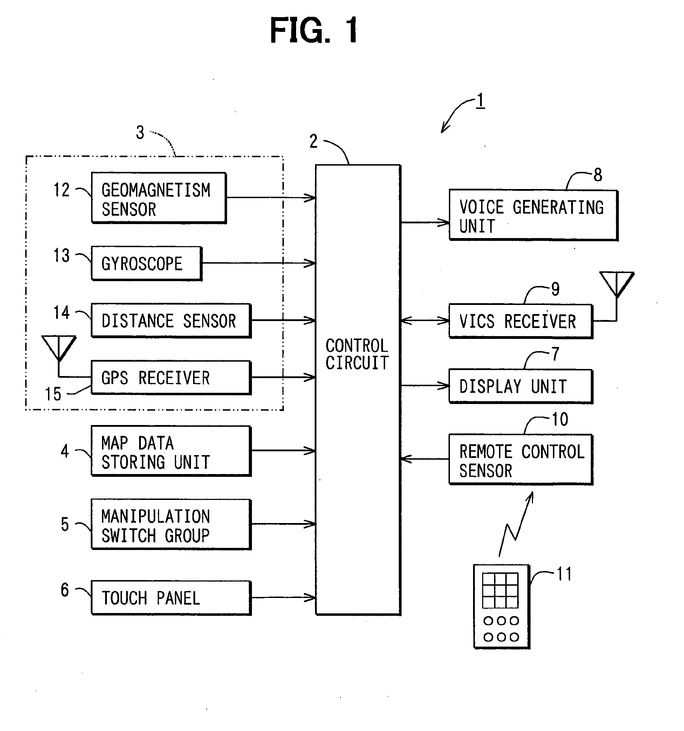

A map display system (or car navigation system) according to an embodiment of the present invention will be described in connection with drawings. FIG. 1 is a block diagram schematically illustrating overall structure of a map display system 1. As illustrated in the figure, the map display system 1 includes a control circuit 2 as a controlling means, a position detection unit 3 as a position detecting means, a map data storing unit 4 as a map data storing means, a manipulation switch group 5 as an inputting means, a touch panel 6 as a manipulating means, a display unit 7 as a displaying means, a voice generating unit 8, a VICS receiver 9, a remote control sensor 10, a remote controller 11 that is paired with the remote control sensor as a manipulating means, or the like.

The control circuit 2 has a function that controls overall operation of the map display system 1. Namely, the control circuit 2 includes CPU, ROM, RAM, I/O, a bus that connect the preceding components, and the like, all of which are not shown. ROM is stored with an executable program for operating the map display system 1. RAM is temporarily stored with temporary data for executing the program, map data obtained from the map data storing unit 4, information obtained from the VICS receiver 9, or the like.

The position detection unit 3 includes a geomagnetism sensor 12, a gyroscope 13, a distance sensor 14, a GPS (Global Positioning System) receiver 15, and the like. Each sensor 12 to 15 has a different characteristic and detection accuracy, so that high position detection accuracy is obtained by adjusting the respective errors through combining the sensors 12 to 15. Here, a required accuracy level may properly select some of the sensors 12 to 15 instead of selecting all the sensors 12 to 15. Furthermore, the position detection unit 3 can include a steering rotation sensor or a wheel sensor for detecting rotation of tires.

The map data storing unit 4 includes an information recoding medium such as DVD-ROM and a reader for reading out data from the information recording medium to input to the control circuit 2 data read from the information recording medium by the reader. Here, the map data storing unit 4 stores map data, data for map-matching, data for voice route guidance, data for retrieving a position on a map from a destination place name and from genres, and the like.

The display unit 7 includes an LCD (liquid crystal display) for displaying map data, characters, symbols, or the like. On the surface of this display unit 7, the transparent touch panel 6 is attached. The manipulation switch group 5 includes push buttons disposed around the LCD. The manipulation switch group 5, the touch panel 6, and the remote controller 11 are used for inputting data or setting items.

The VICS receiver 9 receives road traffic information sent from VICS as an external information source to input to the control circuit 2. The control circuit 2 detects a traffic regulation point, a congested road, and a congested area with the road traffic information inputted from the VICS receiver 9.

The control circuit 2 has a function as a display controlling means and computes a vehicle's present position based on the position detection unit 3 to display on the LCD of the display unit 7 road maps around the present position based on the map data. The control circuit 2 furthermore displays a pointer, which indicates the present position and a traveling direction, on the displayed map. A reduction scale of the displayed map can be changed through manipulating the manipulation switch group 5.

The control circuit 2 has a function for setting up a route to a destination and a voice route guidance function for outputting a direction where the vehicle should travel according to the set route through the voice generating unit 8. Namely, once a destination or a passing point is set through the manipulation switch group 5, the touch panel 6, and the remote controller 11, the most proper route from the present position to the destination is automatically designated as a guide route. Simultaneously, the guide route is displayed with using a different color over the road map on the LCD of the display unit 7. The control circuit 2 guides, through voice or the like, a user to the vehicle's traveling direction based on the guide route. A method for designating the most proper route includes Dijkstra method or the like.

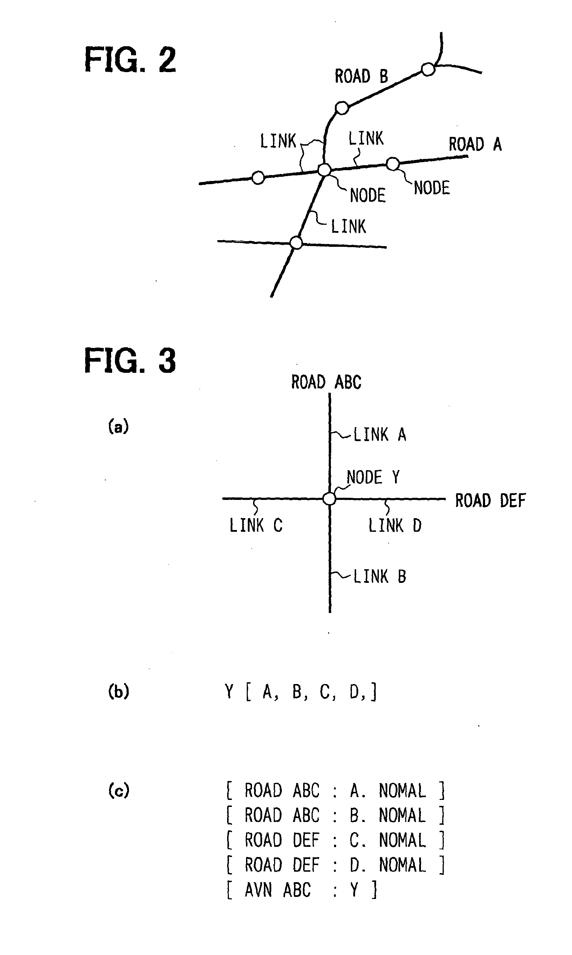

The map data stored in the map data storing unit 4 is data for displaying a map on the LCD of the display unit 7, the data which includes link information, node information, or the like. As shown in FIG. 2, a road on a map is plurally divided by nodes that indicate intersections, branch points, junctions, or bends such as curves that have an angle exceeding a given angle. Betweenness of each pair of the nodes is defined as a link. Connecting the links leads to constituting a map.

The link information includes in each link attribute information such as a unique link ID , a link length indicating a length of the link, coordinates of starting and terminating points, a road width of the link, or a road type (expressway or the like). The node information includes in each node data indicating a unique node ID, coordinates of the node, a node attribute such as a cubic interchange or a multi-lane interchange.

The map data stored in the map data storing unit 4 includes data that is used for retrieving a position when a departure point, a passing point, or a destination is inputted as a place name, a building name, a facility name, a roundabout name, a phone number, or the like. The map data includes map retrieving data where the place name, building name, facility name, roundabout name, phone number, or the like is correlated with coordinates on the map.

Furthermore, in data for retrieving a position using a genre, facilities or buildings are classified into genres such as restaurant, hotel, station, intersection, or roundabout, and further into areas.

Other map data stored in the map data storing unit 4 are connection data indicating connection relation between a node and a link, and relative name retrieving data indicating relation between a link and a road or between a node and an intersection name. The connection data includes, for each node, a node ID and a link ID connected with the node, while the relative name retrieving data includes, for each link, a link ID, a link attribute, a name of a road constituted by the link. Here, when the link constitutes a roundabout, the link attribute includes "ROUNDABOUT" as a roundabout attribute.

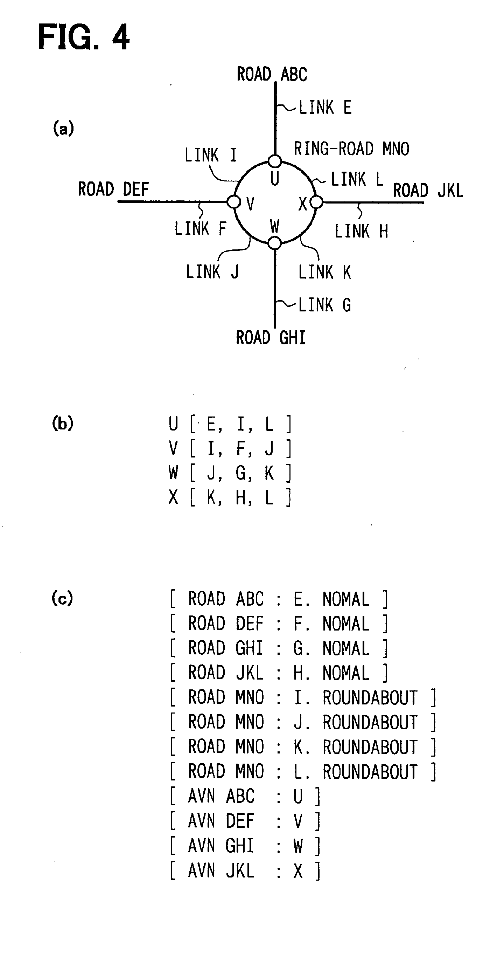

Here, detailed practical instances of the connection data and relative name retrieving data will be explained with applying to a usual intersection shown in FIG. 3 and a roundabout shown in FIG. 4. FIG. 3(a) shows an intersection where Road ABC and Road DEF cross. On map data, the intersection where Road ABC and Road DEF cross is defined as Node Y. Of links that constitute Road ABC, links connected with Node Y are defined as Link A and Link B. Of links that constitute Road DEF, links connected with Node Y are defined as Link C and Link D.

In this intersection, the connection data is Y [A, B, C, D] as shown in FIG. 3(b) and indicates that Links A, B, C, D are connected with Node Y. Furthermore, in this intersection, the relative name retrieving data is [Road ABC: A. normal], [Road ABC: B. normal], [Road DEF: C. normal], [Road DEF: D. normal], and [AVN ABC: Y] as shown in FIG. 3(c) and indicates the following: Links A, B are included in links of Road ABC and have attributes of being normal; Links C, D are included in links of Road DEF and have attributes of being normal; and a name of Node Y is AVN ABC.

FIG. 4 (a) shows a roundabout where Road ABC, Road DEF, Road GHI, and Road JKL connect. The preceding four roads are connected via Ring-road MNO. On map data, the connecting points where the ring-road and the four roads are connected are defined as Nodes U, V, W, X. Links of Road ABC, Road DEF, Road GHI, Road JKL, and Ring-road MNO, all of which are connected with the preceding Nodes U, V, W, X are defined as Links E, F, G, H, and Links I, J, K, L.

In this roundabout, the connection data is U [E, I, L], V [I, F, J], W [J, G, K], and X [K, H, L] as shown in FIG. 4(b). The connection data indicates, as shown in FIG. 4(c), the following: Node U is connected with Links E, I, L; Node V is connected with Links I, F, J; Node W is connected with Links J, G, K; and Node X is connected with Links K, H, L. Furthermore, in this roundabout, the relative name retrieving data is the following: [Road ABC: E. normal]; [Road DEF: F. normal]; [Road GHI: G. normal]; [Road JKL: H. normal]; [Road MNO: I. roundabout]; [Road MNO: J. roundabout]; [Road MNO: K. roundabout]; [Road MNO: L. roundabout]; [AVN DEF: U]; [AVN DEF: V]; [AVN DEF: W]; and [AVN DEF: X]. These indicate the following: Links E, F, G, H are included in links of Road ABC, Road DEF, Road GHI, and Road JKL, respectively and have attributes of being normal; Links I, J, K, L are included in links of Ring-road MNO and have attributes of being roundabout; and names of Nodes U, V, W, X are the same AVN DEF.

Operation will be explained in a case a destination is designated for making the map display unit 1 having the above structure execute route guidance. Here, it is assumed that it is known that a place where a user wants to practically go is located in a northern area of a roundabout having a name of AVN DEF. Explanation will be made in a case where Roundabout DEF is designated as a destination. As a method for designating a roundabout as a destination, there are three other methods of name retrieving, genre retrieving, and intersection retrieving in addition to a method where Roundabout DEF is searched for by scrolling a map displayed on the LCD of the display unit 7. Hereafter, the name retrieving, genre retrieving, and intersection retrieving will be explained in order, respectively.

### (1) Name retrieving

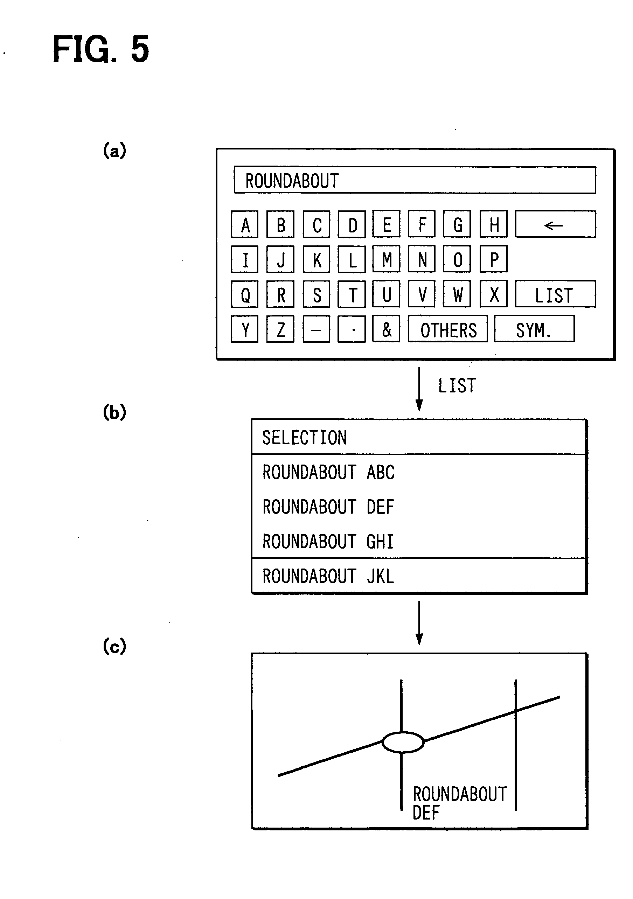

when name retrieving is designated for retrieving a destination by manipulating the manipulation switch group 5 or the remote controller 11, alphabetic characters are displayed on the LCD of the display unit 7 as shown in FIG. 5(a). As, through manipulating the touch panel 6, "r" "o" "u" "n" "d" "a" "b" "o" "u," and "t" are serially inputted, a list of "roundabout" is displayed on the LCD display as shown in FIG. 5(b). For instance, Roundabout DEF is then selected from the list.

The control circuit 2 retrieves coordinates on the map of Roundabout DEF with reference to map retrieving data stored in the map data storing unit 4 to display on the LCD the map of the area surrounding Roundabout DEF as shown in FIG. 5(c). In this display, a marker (not shown) is placed in Roundabout DEF on the map, so that the marked position is confirmed and the destination is thereby designated through the manipulation switch group 5 or the remote controller 11. The control circuit 2 computes a guide route to the designated destination from the present position with reference to various data stored in the map data storing unit 4 to display the computed guide route with a color differentiated from that of usual roads.

### (2) Genre retrieving

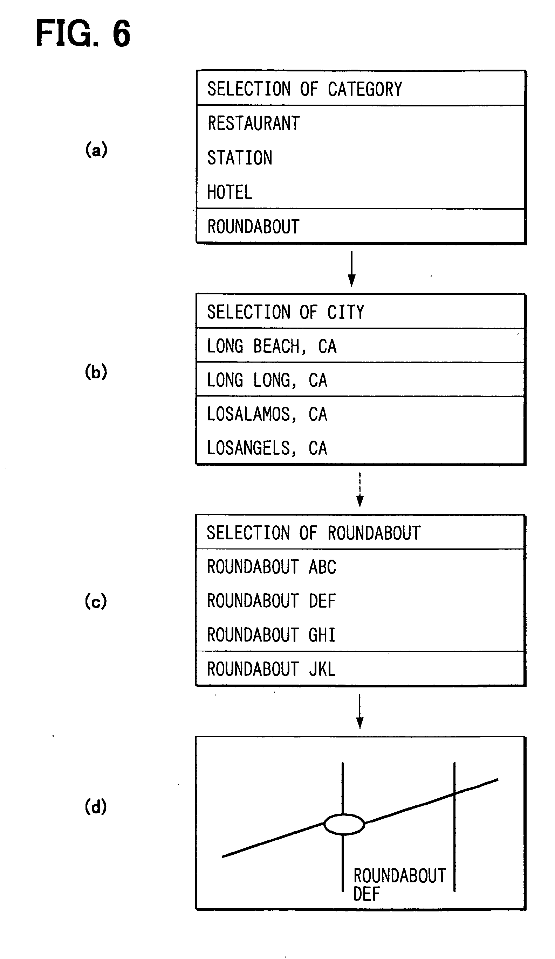

When genre retrieving is designated for retrieving a destination by manipulating the manipulation switch group 5 or the remote controller 11, a genre list is displayed on the LCD of the display unit 7 as shown in FIG. 6(a). Through manipulating the touch panel 6, a roundabout is selected.

Then, an area list is displayed as shown in FIG. 6(b), so that an area where Roundabout DEF is located is selected. Next, as shown in FIG. 6(c), a list of roundabouts in the area is displayed. Through the touch panel 6, Roundabout DEF is then selected among the list. Likewise in the name retrieving, the control circuit 2 thereby retrieves coordinates on the map of Roundabout DEF with reference to map retrieving data stored in the map data storing unit 4. The control circuit 6 thereby displays on the LCD the map of the area surrounding Roundabout DEF as shown in FIG. 6(d). In this display, a marker (not shown) is located in Roundabout DEF on the map, so that the marked position is confirmed and the destination is thereby designated through the manipulation switch group 5 or the remote controller 11. The control circuit 2 computes a guide route to the designated destination from the present position with reference to various data stored in the map data storing unit 4 to display the computed guide route with a color differentiated from that of usual roads.

### (3) Intersection retrieving

To retrieve a roundabout by the intersection retrieving, at least two roads that are connected with the intersection must be previously known. For instance, it is assumed that a user who would like to go to Restaurant A asks by phone where Restaurant A is and receives the reply of "Restaurant A is on the north of Roundabout DEF." The user additionally obtains names of the roads that are connected with Roundabout DEF. Here, Roundabout DEF is connected with Road ABC and Road DEF. Explanation will be made with reference to FIGs. 3, 4, 7, and FIG. 8 that shows operation of the control circuit 2.

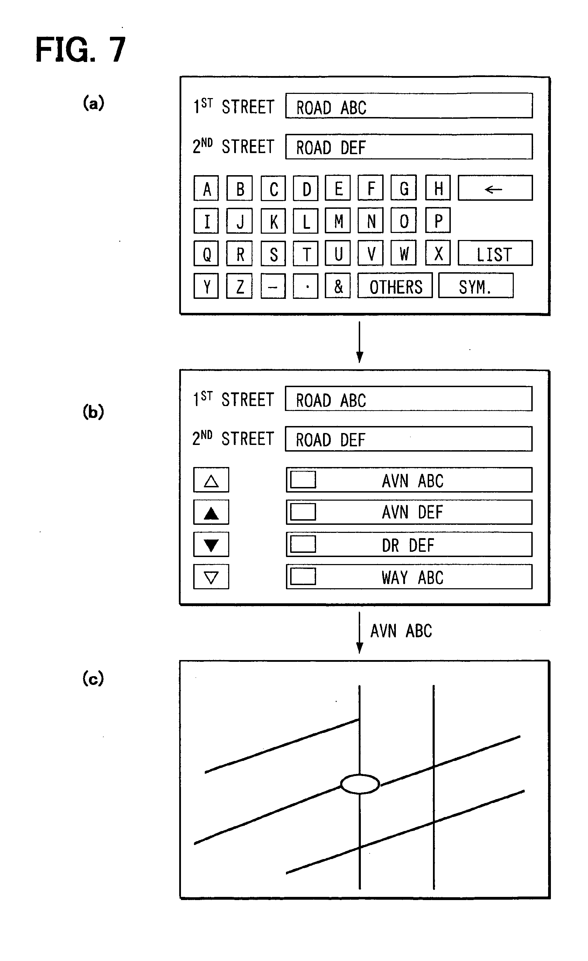

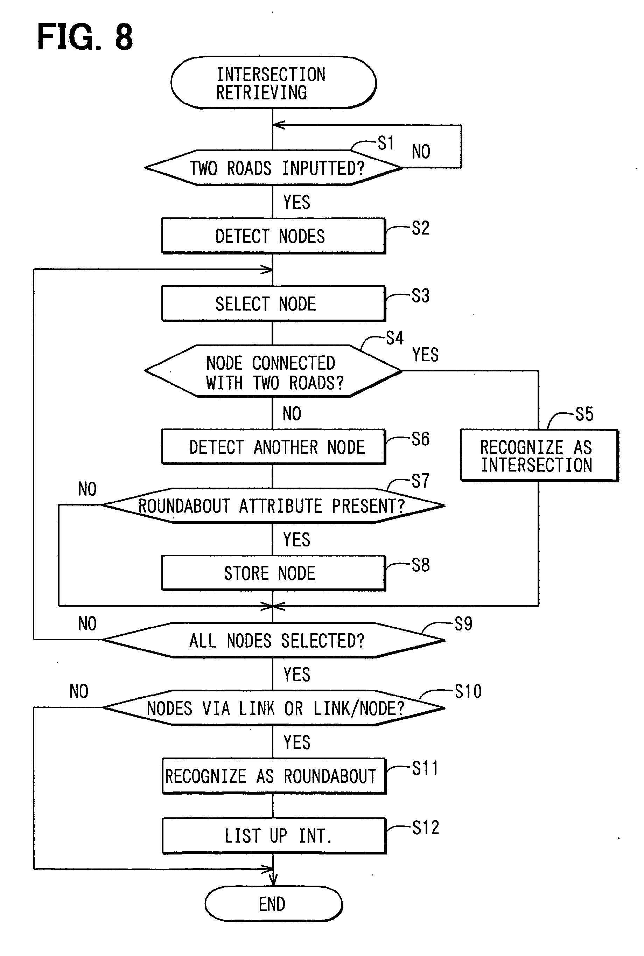

When intersection retrieving is designated for retrieving a destination by manipulating the manipulation switch group 5 or the remote controller 11, alphabetic characters are displayed on the LCD of the display unit 7 as shown in FIG. 7(a). Through manipulating the touch panel 6, two roads of Road ABC and Road DEF are inputted. The names of the two roads are inputted ("YES" at Step 1 in FIG. 8), the control circuit 2 displays the inputted two road names, vertically in two rows, on the LCD as shown in FIG. 7(b).

Thereafter, the control circuit 2 searches connection data for the node that is connected with at least one link of the links of Road ABC and the links of Road DEF (Step 2: node detecting means). Here, regarding an intersection shown in FIG. 3(a), Node Y that is connected with a link of Road ABC and a link of Road DEF is detected as one of nodes that are connected with the links of Road ABC or the links of Road DEF by the control circuit 2. Regarding a roundabout shown in FIG. 4(a), Node U or Node V that is connected with a link of Road ABC or a link of Road DEF is detected as one of nodes that are connected with the links of Road ABC or the links of Road DEF, respectively.

Next, the control circuit 2 selects (Step 3) a given node of all the detected nodes to determine (Step 4: connection link determining means) whether the given node is connected with a link of Road ABC and a link of Road DEF. Here, provided that the selected given node is Node Y shown in FIG. 3(a), Node Y is connected with Links A, B, C, D of the two roads, so that the control circuit 2 determines "YES" at Step 4. The control circuit 2 then proceeds to Step 5 to recognize Node Y as a usual intersection of Road ABC and Road DEF. The control circuit 2 then detects with reference to relative name retrieving data that a name of Node Y is AVN ABC, and proceeds to Step 9 where it is determined whether all the detected nodes are thoroughly selected.

By contrast, provided that the given node selected at Step 3 is Node U shown in FIG. 4(a), Node U is connected with Links E, I, L. Link E constitutes Road ABC but not Road DEF, while Links I, L constitute neither Road ABC nor Road DEF. Since Node U is connected only with Link E of Road ABC, the control circuit 2 determines "NO" at Step 4 and proceeds to Step 6 where Links I, L other than Link E are detected.

The control circuit 2 detects (Step 6) Links I, L, and determines (Step 7: attribute determining means) whether Link I and/or Link L has a roundabout attribute, with the relative name retrieving data. Here, since both Links I, L possess the roundabout attributes ("YES" at Step 7), Node U is stored as a roundabout candidate (Step 8).

Likewise, Node V is connected with Links F, I, J. Link F constitutes Road DEF but' not Road ABC, while Links I, J constitute neither Road ABC nor Road DEF. Since Node V is connected only with Link F of Road DEF, the control circuit 2 determines (Step 7) whether Link I and/or Link J has a roundabout attribute, with the relative name retrieving data. Here, since both Links I, J have the roundabout attributes ("YES" at Step 7), Node V is stored also as a roundabout candidate (Step 8).

After the above operation is executed for all the nodes detected as the links of Road ABC or Road DEF ("YES" at Step 9), the control circuit 2 proceeds to Step 10. Here, the control circuit 2 determines (Step 10: roundabout determining means) whether there are two nodes that stored as roundabout candidates and connected with each other through one link that has a roundabout attribute or through one or more nodes and links that have roundabout attributes. With affirmative determination, the control circuit 2 determines that the two nodes are included in a roundabout ("YES" at Step 10).

In the instance shown in FIG. 4, Nodes U, V are connected with each other only through Link I that has a roundabout attribute, so that the two Nodes U, V are determined to be included in a roundabout. By contrast, provided that Nodes V, X are stored as roundabout candidates, Nodes V, X are connected with each other only through Links I, L that have roundabout attributes and Node U (or only through Links J, K that have roundabout attributes and Node W). Therefore, Nodes V, X are determined to be included in a roundabout.

The control circuit 2 detects with reference to relative name retrieving data that names of Nodes U, V are AVN ABC and AVN DEF (Step 11). The control circuit 2 then lists up intersections detected at Step 5 and/or roundabouts detected at Step 11 to display them on a widow shown in FIG. 7(b) (Step 12: intersection name retrieving means) and terminate the operation of intersection retrieving. The reason why plural intersections (including roundabouts) are listed up is that roads having the same name may exist in various areas and plural intersections of the roads that have the same name may be listed up.

A name list shown in the window of the LCD can be vertically scrolled through touching white or black arrows. When one of the white arrows is touched, names in the list are scrolled up or down one by one. By contrast, when one of the black arrows is touched names in the list are scrolled up or down two by two.

When the user finds an aimed roundabout from the names scrolled and displayed on the window, the user manipulates to select the roundabout. The control circuit 2 displays on the LCD a map surrounding the selected roundabout as shown in FIG. 7(c).

The user confirms that the roundabout displayed on the LCD is the aimed roundabout to manipulate for designating it as the destination. The control circuit 2 thereby designates a guide route from a present position to the roundabout as the destination. The control circuit 2 displays the guide route with using a color different from a color for usual roads on the map displayed on the LCD.

Namely, two of a given node and a certain node are detected as intersections with the following conditions; the given and certain nodes are connected with a link of a first road and a link of a second road, respectively; and the given and certain nodes are connected also with each other through one link that has a roundabout attribute or through one or more nodes and links that have roundabout attributes. As a result, a roundabout can be easily retrieved.

It will be obvious to those skilled in the art that various changes may be made in the above-described embodiments of the present invention. However, the scope of the present invention should be determined by the following claims.

## Claims

1. A map display system (1) **characterized by** comprising:
map data storing means (4) for storing map data;
displaying means (7) for displaying the map data stored by the map data storing means;
inputting means (5, 6, 10) for inputting data for retrieving a desired point; and
controlling means (2) for retrieving, based on the map data stored by the map data storing means and the data inputted by the inputting means, the desired point and displaying a map including the retrieved desired point, wherein the controlling means is constructed as retrieving a roundabout based on the map data stored by the map data storing means and the data inputted by the inputting means when the data inputted by the inputting means is for retrieving a roundabout.

2. A map display system according to Claim 1, **characterized in that**:
wherein the map data includes node information regarding nodes and link information regarding links;
wherein, when data indicating a first road and a second road is inputted by the inputting means, the controlling means retrieves first nodes and second nodes, wherein the first nodes and the second nodes are connected with first links constituting the first road and second links constituting the second road, respectively; and
wherein, when a given node of the first nodes and a certain node of the second nodes are connected with each other through a link that has a roundabout attribute or through one or more nodes and links having roundabout attributes, the control circuit recognizes that the given and certain nodes are nodes of a roundabout and displays, on the displaying means, a map including the roundabout having the given and certain nodes.

3. A map display system according to Claim 1, **characterized in that**:
wherein the map data includes data where names of roundabouts are correlated with map positions of the roundabouts; and
wherein, when a name of a roundabout is inputted by the inputting means, the controlling means displays, on the displaying means, a map including the roundabout inputted by the inputting means based on the inputted name of the roundabout and the map data.

4. A map display system according to Claim 1, **characterized in that**:
wherein the map data includes data where names of points are correlated with map positions of the points and data where the points are classified by genres and areas;
wherein, when a genre of the desired point is selected and an area where the desired point is located is selected, the controlling means retrieves names of roundabouts included in the selected area based on the map data and displays, on the displaying means, the names of roundabouts included in the selected area; and
wherein, when a given name is selected from the displayed names of roundabouts by the inputting means, the controlling means displays, on the displaying means, the selected given name and a map including the corresponding roundabout based on the inputted given name of roundabout and the map data.
